# EUROPÄISCHE PATENTSCHRIFT

(11) **EP 1 890 929 B1**
(45) Veröffentlichungstag und Bekanntmachung des Hinweises auf die Patenterteilung: **29.06.2011**
(21) Anmeldenummer: 06754800.8
(22) Anmeldetag: 24.04.2006
(51) Int. Cl.: B62D 65/02, B23K 37/047

(54) **VERFAHREN ZUM ZUSAMMENBAUEN VON BAUTEILEN EINER FAHRZEUGKAROSSERIE**
METHOD FOR ASSEMBLING COMPONENTS OF A VEHICLE BODY
PROCEDE POUR ASSEMBLER DES PIECES D'UNE CARROSSERIE DE VEHICULE

(30) Priorität: 16.06.2005 DE 102005027986
(43) Veröffentlichungstag der Anmeldung: 27.02.2008
(73) Patentinhaber: ThyssenKrupp Drauz Nothelfer GmbH, 74076 Heilbronn (DE)
(72) Erfinder: GAUGGEL, Gerd, 88212 Ravensburg (DE)
(74) Vertreter: Cohausz & Florack
(86) Internationale Anmeldenummer: PCT/EP2006/061772
(87) Internationale Veröffentlichungsnummer: WO 2006/133988

(56) Entgegenhaltungen:
- EP-A1- 0 201 395
- EP-A1- 0 760 770
- EP-A1- 0 760 770
- EP-A2- 0 147 910
- EP-A2- 1 321 355
- WO-A1-98/45161
- WO-A1-98/45161
- DE-A1- 19 533 389
- JP-A- 62 143 771
- JP-A- 62 143 771
- US-A- 5 011 068
- US-A- 5 409 158

## Beschreibung

Die Erfindung betrifft ein Verfahren zum Zusammenbauen von Bauteilen einer Fahrzeugkarosserie in einer Bearbeitungsstation mit einer Geometriebox, in der ein Bauteil, insbesondere eine Bodengruppe, positionsgenau fixiert ist und an der Spannrahmen, an denen die anderen Bauteile, insbesondere Seitenwandteile, positionsgenau gehalten sind und mit denen sie an die Geometriebox herangeführt werden, positions- und lagegerecht derart verspannt werden, dass die miteinander zu verbindenden Bauteile sich in der gewünschten Lage befinden und in dieser Lage miteinander verbunden werden.

Verschiedene Verfahren zum Zusammenbauen von Bauteilen einer Fahrzeugkarosserie sind bekannt. Durch die Verwendung einer Geometriebox und Spannrahmen für die zusammenzubauenden Bauteile wird eine maßgenaue Herstellung der Fahrzeugkarosserien erreicht.

Bei einem bekannten Verfahren (EP 0 760 770 B1) wird die Geometriebox aus den mittels Transportgeräten zur Bearbeitungsstation geführten, mit Karosserieteilen bestückten Spannrahmen selbst zusammengesetzt. Die Spannrahmen sind dabei einteilig oder alternativ mehrteilig ausgebildet, wobei die mehrteilig ausgebildeten Spannrahmen gegebenenfalls auch von verschiedenen Industrierobotern gehandhabt werden. Insbesondere können die mehrteilig ausgebildeten Spannrahmen dabei gegebenenfalls auch verschiedene Baugruppen eines Seitenteils, Dachteils oder einer Bodengruppe tragen. Die Baugruppen können dann untereinander noch in der Bearbeitungsstation verbunden, insbesondere geheftet und ausgeschweißt werden. Die Spannrahmen werden jeweils mit einem Karosserieteil bestückt zur Bearbeitungsstation geführt.

Das bedeutet, dass die Spannrahmen sehr steif und damit auch sehr schwer gestaltet sind. Entsprechend schweres Transportgerät ist für die Zuführung der Spannrahmen erforderlich, zumindest wenn die Bauteile groß und einteilig sind.

Bei einem anderen bekannten Verfahren (EP 0 968 073 B1) und einer entsprechenden Anlage, von der die Erfindung ausgeht, ist eine stationäre Geometriebox vorgesehen, in der ein Bauteil der Fahrzeugkarosserie, insbesondere die Bodengruppe auf einem Unterbau eine exakt definierte geometrische Lage zur Geometriebox einnimmt. Um die übrigen Bauteile heranzuführen, ist die Geometriebox innerhalb eines aufwendigen Bauteilroboters mit verschiedenen Transportgeräten für die übrigen Bauteile angeordnet. Dabei ist für jedes anzubauende Bauteil ein Spannrahmen vorgesehen. Deshalb werden Spannrahmen mit einer Länge von 4 bis 6 Metern benötigt. Da solche Spannrahmen für das positions- und lagegerechte Verspannen der Bauteile an der Geometriebox ausreichend steif ausgelegt sein müssen, können sie in der Praxis auf ein Gewicht von 2000 Kilogramm kommen. Mit marktüblichen Schwerlastrobotern lassen sich solche Gewichte nicht mehr manipulieren.

Des Weiteren ist aus der WO 98/45161 ein Verfahren bekannt, bei dem zum Zusammenbau einer Fahrzeugkarosserie aus einer Mehrzahl von Karosserieteilen ein Trägersystem verwendet wird, das mehrere getrennte, nach Bedarf gestaltete und dimensionierte Stützelementen (Spannrahmen) umfasst. Die Stützelemente sind leichtgewichtig ausgebildet und werden mittels Verriegelungseinrichtungen miteinander verspannt, wobei Roboter für die Handhabung der Fahrzeugkomponenten sowie der Stützelemente verwendet werden.

Der Erfindung liegt die Aufgabe zu Grunde, ein Verfahren zum Zusammenbauen von Bauteilen einer Fahrzeugkarosserie zu schaffen, das den Einsatz von aufwendigen Transportgeräten für schwere Spannrahmen nicht länger notwendig macht.

Diese Aufgabe wird erfindungsgemäß durch ein Verfahren mit den Merkmalen des Anspruchs 1 gelöst.

Der Erfindung liegt der Gedanke zu Grunde, dass zwar an der Geometriebox zum Aufbringen der notwendigen Spannkräfte steife Spannrahmen notwendig sind, doch nicht für den Transport der Bauteile zur Geometriebox. Deshalb reicht es aus, wenn beim Transport das Seitenwandteil nicht vollflächig vom Spannrahmen erfasst wird. Entsprechend leicht kann dann dessen Gewicht sein. Das hat zur Konsequenz, dass dafür keine für 2000 Kilogramm Last ausgelegten speziellen Transportgeräte benötigt werden, sondern der Transport mit marktüblichen Schwerlastrobotern erfolgen kann. Auch braucht nicht länger das Transportgerät für die Spannrahmenteile ausreichend groß dimensioniert zu werden, um die Spannkräfte beim Zusammenbau der Bauteile aufzubringen.

Diese Kräfte können, wie an sich bekannt, von geeigneten Positioniert- und Fixiereinrichtungen aufgebaut werden, die zwischen der Geometriebox und den Spannrahmenteilen wirken. Ein weiterer Vorteil der Aufteilung des Spannrahmens für jedes Bauteil in mehrere Spannrahmenteile besteht darin, dass in Abhängigkeit von dem Bauteiltyp verschiedene Spannrahmenteiltypen (verschiedene Module) miteinander kombiniert werden können. Ist z.B. bei einem Seitenwandbauteil der vordere Bereich für verschiedene Karosserietypen gleich, der hintere Teil aber unterschiedlich, dann können verschiedene hintere Spannrahmenteile mit ein und demselben vorderen Spannrahmenteil kombiniert werden. Die Positionierung der beiden Spannrahmenteile, und zwar des beladenen Spannrahmenteils und des leeren Spannrahmenteils, erfolgt vorzugsweise hintereinander. Mit dem mit dem Bauteil, z.B. einem Seitenwandbauteil, beladenen Spannrahmenteil erfolgt dann eine Vorpositionierung dieses Bauteils an der Geometriebox und gegenüber dem in der Geometriebox bereits positionierten Bauteil, z.B. der Bodengruppe. Dann wird der andere leere Spannrahmenteil herangeführt und an ihm das Bauteil positions- und lagegerecht festgelegt. Abschließend erfolgt dann die endgültige Verspannung der Spannrahmenteile an der Geometriebox. Wegen der sukzessiven Heranführung der Spannrahmenteile an die Geometriebox und der Vorpositionierung des zuerst herangeführten Spannrahmenteils an der Geometriebox kann das dann nicht mehr für den ersten Spannrahmenteil benötige Transportgerät verwendet werden, um den leeren Spannrahmenteil heranzuführen.

Im Folgenden wird die Erfindung anhand einer die wesentlichen Teile der Anlage schematisch darstellenden Zeichnung näher erläutert. Im Einzelnen zeigen:
- Fig.1: eine Anlage mit einer Geometriebox und auf beiden Seiten der Geometriebox angeordneten Schwerlastrobotern mit Spannrahmen in Stirnansicht,
- Fig. 2: die Geometriebox gemäß Fig. 1 mit zwei fixierten Spannrahmen in Seitenansicht,
- Fig. 3: Positionier- und Fixiereinrichtungen für die Spannrahmen in verschiedenen Ausführungen in Seitenansicht,

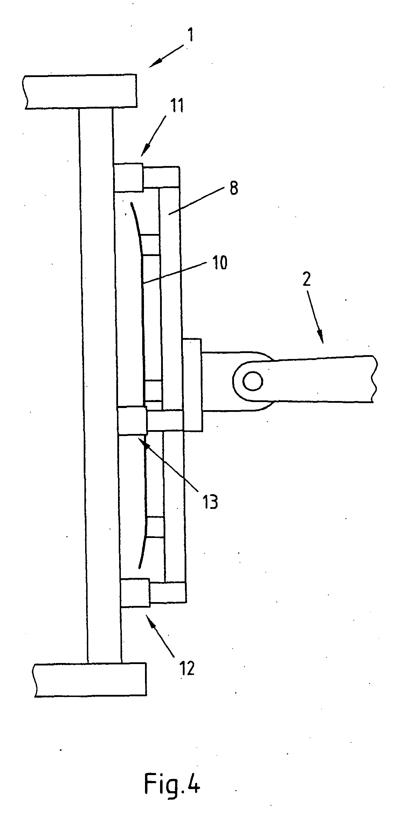

- Fig. 4: die Geometriebox gemäß Fig. 1 im Ausschnitt in Stirnansicht,

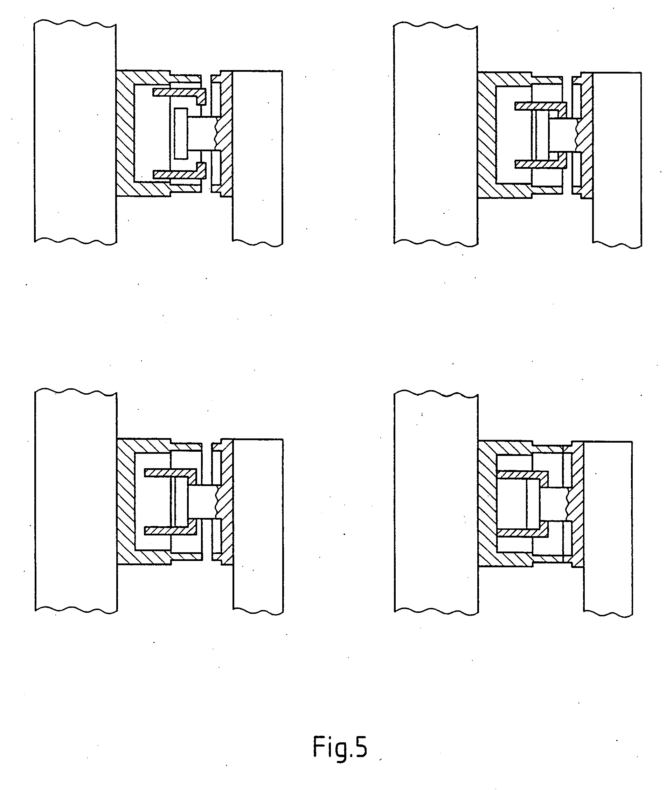

- Fig. 5: Positionier- und Fixiereinrichtungen an der Geometriebox und an einem Spannrahmen in verschiedenen Phasen der Positionierung und Fixierung der Spannrahmen.

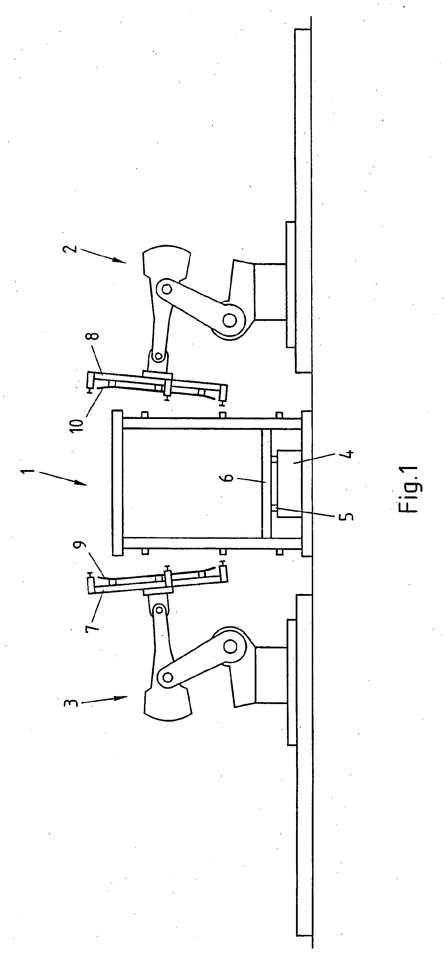

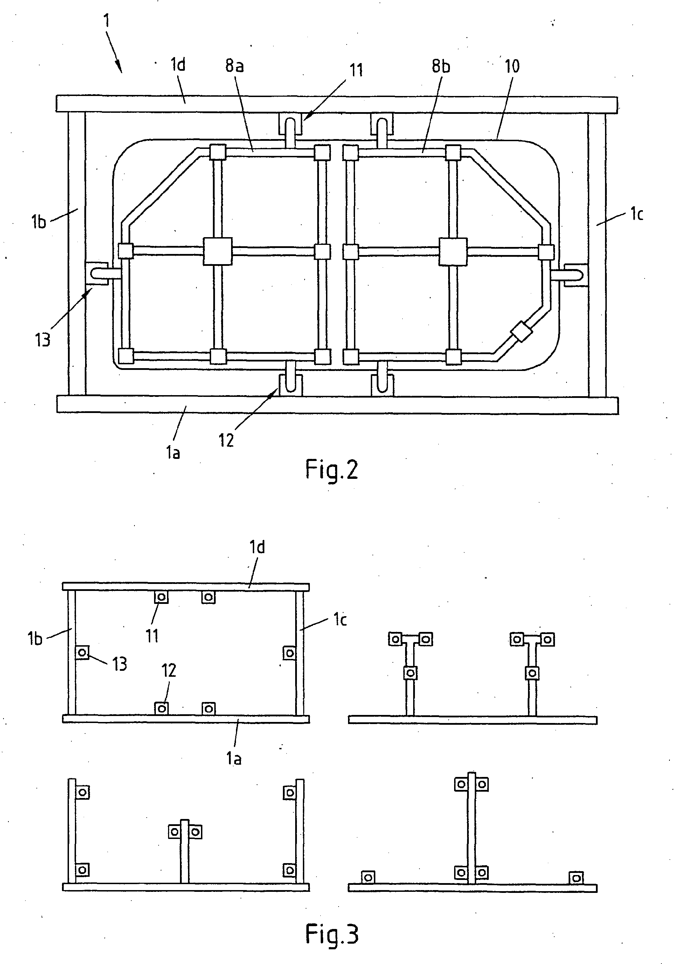

Die in Fig.1 dargestellte Anlage zum Zusammenbauen von Bauteilen einer Fahrzeugkarosserie weist eine Bearbeitungsstation auf. Die Bearbeitungsstation umfasst eine stationäre Geometriebox 1, die als Rahmenkonstruktion ausgeführt ist. In Fig. 3 sind verschiedene Möglichkeiten der Rahmenkonstruktion in Seitenansicht dargestellt, von denen das erste Ausführungsbeispiel aus einer Bodengrundplatte 1a, seitlichen Säulen 1b, 1c und einem oberen Träger 1d besteht. Weiter umfasst die Bearbeitungsstation auf beiden Seiten der Geometriebox 1 Schwerlastroboter 2, 3 und nicht dargestellte Fügeeinrichtungen, wie z.B. Schweißeinrichtungen, insbesondere einen Laserschweißapparat, Löteinrichtungen u.dgl., mit denen die zusammenzubauenden Bauteile der Karosserie miteinander durch Schweißen dauerhaft miteinander verbunden werden können.

Innerhalb der Geometriebox 1 befindet sich ein Unterbau 4, der als Spannrahmen gestaltet sein kann und auf dem mittels Positionier- und Fixierelementen 5 ein Bauteil 6, insbesondere die Bodengruppe der Fahrzeugkarosserie, positionsgenau fixiert werden kann. Statt einer Bodengruppe kann auch eine käfigartige Fahrzeugstruktur befestigt werden. Wichtig ist, dass die Positionierung des Bauteils 6 exakt zu vorgegebenen Punkten an der Geometriebox 1 erfolgt, die auch für die Positionierung der Spannrahmen 7, 8 der anderen Bauteile 9, 10 dienen. Die Spannrahmen 7, 8 bestehen aus mehreren unabhängigen Spannrahmenteilen 8a, 8b (siehe Fig. 2), die jeweils geeignete Greif- und Halteelemente für die positionsgenaue Festlegung der Bauteile 10 aufweisen.

Um mit dem Bauteil 6 andere Bauteile, insbesondere ein Seitenwandteil 10 zu verbinden, wird das Spannrahmenteil 8a, das das zuzuführende Bauteil 10 in einem Teilbereich lage- und positionsgerecht erfasst und hält, mittels des Schwerlastroboters 2 an die Geometriebox 1 herangeführt und hier vorpositioniert. Dafür sind an der Geometriebox 1 und dem Spannrahmen 8a zusammenwirkende Teile von Positionier- und Fixiereinrichtungen 11, 12 vorgesehen. Die Geometriebox 1 weist mehrere über die Fläche verteilte Teile solcher Positionier- und Fixiereinrichtungen 11, 12, 13 auf. Fig. 2 zeigt für die Verteilung einige Alternativen.

Sobald der Spannrahmen 8a mittels der Positionier- und Fixiereinrichtungen 11, 12, 13 an der Geometriebox 1 vorpositioniert gehalten wird, kann der Schwerlastroboter 2 von den Spannrahmen 8a abgekoppelt werden. Er steht dann für die Aufnahme und die Zuführung des anderen Spannrahmenteils 8b zur Geometriebox 1 bzw. zu dem freien Bereich der Bauteile 10 zur Verfügung. Alternativ kann das Spannrahmenteil 8b auch durch einen anderen Schwerlastroboter bewegt werden. Sobald beide Spannrahmenteile 8a, 8b das Bauteile 10 erfasst haben und mit ihren Positionier- und Fixiereinrichtungen 11, 12, 13 an der Geometriebox 1 vorpositioniert sind, werden sämtliche Positionier- und Fixiereinrichtungen 11, 12, 13 aktiviert, so dass über die Spannrahmenteile 8a, 8b das Bauteil 10 in seine Endposition an dem schon festliegenden Bauteil 6 gebracht wird. Dann können die zusammengeführten Bauteile 6, 10 miteinander verschweißt werden.

## Patentansprüche

1. Verfahren zum Zusammenbauen von Bauteilen (6, 9, 10) einer Fahrzeugkarosserie in einer Bearbeitungsstation mit einer Positionierungspunkte aufweisenden Geometriebox (1), umfassend:
positionsgenaues Fixieren und Halten eines Bauteils (6), insbesondere eine Bodengruppe, in der Geometriebox (1) mit Spannrahmen (7, 8);
Heranführen anderer Bauteile (9, 10), insbesondere Seitenwandteile, an die Geometriebox (1) und positionsgenaues Halten der anderen Bauteile (9, 10) in der Geometriebox (1) mit einem mehrteiligen Spannrahmen (7, 8), umfassend:
Zuführen eines Bauteils (10) zur Geometriebox (1) mit nur einem Spannrahmenteil (8a) des mehrteiligen Spannrahmens (7, 8);
Vorpositionieren dieses Spannrahmenteils (8a) und der anderen Bauteile (9, 10) an der Geometriebox (1) relativ zu dem bereits in der Geometriebox (1) gehaltenen Bauteil (6);
Heranführen des nächsten, leeren Spannrahmenteils (8b) des mehrteiligen Spannrahmens (7, 8) an das in der Geometriebox (1) vorpositionierte Bauteil (10);
positionsgenaues Festlegen des Bauteils (10) an dem nächsten, leeren Spannrahmenteil (8b);
Aktivieren der Positionier- und
Fixiereinrichtungen (5) der Geometriebox (1), so dass dann das Bauteil (10) durch die Spannrahmenteile (8a, 8b) positions- und lagegerecht in die gewünschte Lage relativ zu dem bereits in der Geometriebox (1) gehaltenen Bauteil (6) gebracht wird.

2. Verfahren nach Anspruch 1,
**dadurch gekennzeichnet, dass** für das Zuführen des beladenen und leeren Spannrahmenteils (8a, 8b) dasselbe Transportgerät (2) verwendet wird.

## Claims

1. A method for assembling components (6, 9, 10) of a vehicle body in a processing station having a geometry box (1) having positioning points, comprising:
fixing and retaining a component (6), in particular a floor group, precisely in position in the geometry box (1) with clamping frames (7, 8),
guiding other components (9, 10), in particular side wall parts, to the geometry box (1) and
retaining the other components (9, 10) precisely in position in the geometry box (1) using a multipart clamping frame (7, 8), comprising:
feeding a component (10) to the geometry box (1) using only one clamping frame part (8a) of the multipart clamping frame (7, 8),
pre-positioning said clamping frame part (8a) and the other components (9, 10) on the geometry box (1) in relation to the component (6) already retained in the geometry box (1),
guiding the next, empty clamping frame part (8b) of the multipart clamping frame (7, 8) to the component (10) pre-positioned in the geometry box (1),
fixing the component (10) precisely in position on the next, empty clamping frame part (8b),
activating the positioning and fixing devices of the geometry box (1) such that the component (10) is then brought by the clamping frame parts (8a, 8b) in the correct position and attitude into the desired position in relation to the component (6) already retained in the geometry box (1).

2. The method according to Claim 1, **characterized in that** the same transport device (2) is used for feeding the charged and empty clamping frame parts (8a, 8b).

## Revendications

1. Procédé pour assembler des pièces (6, 9, 10) d'une carrosserie de véhicule automobile dans une station de travail, qui est dotée d'une boîte géométrique (1), ledit procédé comprenant:
- fixation en position exacte et maintien d'une pièce (6), en particulier d'un dessous de caisse, dans la boîte géométrique (1), avec des cadres de serrage (7, 8);
- Amenée dans la boîte géométrique (1) d'autres pièces, en particulier des pièces de parois latérales, et maintien en position exacte des autres pièces (9, 10) dans la boîte géométrique (1) au moyen d'un cadre de serrage à plusieurs pièces (7, 8),
comprenant
- Amenée d'une pièce (10) dans la boîte géométrique (1) avec seulement un élément (8a) du cadre de serrage à plusieurs pièces (7, 8);
- Positionnement préliminaire de cet élément de cadre de serrage (8a) et des autres pièces (9, 10) à la boîte géométrique (1) par rapport à la pièce (6) déjà maintenue dans la boîte géométrique (1);
- Amenée de l'élément (8b) du cadre de serrage (7, 8) vide, suivant, à la pièce (10) préliminairement positionnée dans la boîte géométrique (1);
- Fixation en position exacte de la pièce (10) à l'élément de cadre de serrage (8b) vide, suivant;
- Activation des dispositifs de positionnement et de fixation (5) de la boîte géométrique (1) de sorte que la pièce (10) soit alors mise, conformément positionnée et disposée, moyennant les élément (8a, 8b) du cadre dans la position voulue, par rapport à la pièce (6) déjà maintenue dans la boîte géométrique (1).

2. Procédé selon la revendication 1, **caractérisé en ce que** le même appareil de transport est utilisé pour l'amenée de l'élément (8a, 8b) de cadre de serrage chargé et vide.
